# FASCICULE DE BREVET EUROPEEN

(11) **EP 2 663 739 B1**
(45) Date de publication et mention de la délivrance du brevet: **03.06.2015**
(21) Numéro de dépôt: 12702590.6
(22) Date de dépôt: 06.01.2012
(51) Int. Cl.: F01D 5/00

(54) **PROCÉDÉ DE DÉSOLIDARISATION PAR INDUCTION D'UNE PIÈCE MÉCANIQUE MAGNÉTIQUE COLLÉE À UNE PIÈCE MÉCANIQUE.**
VERFAHREN ZUM TRENNEN ANEINANDER HAFTENDER MAGNETISCHER MECHANISCHER TEILE DURCH INDUKTION
METHOD FOR DISCONNECTING, BY INDUCTION, A MAGNETIC MECHANICAL PART ADHERED TO A MECHANICAL PART

(30) Priorité: 11.01.2011 FR 1150217
(43) Date de publication de la demande: 20.11.2013
(73) Titulaire: Snecma, 75015 Paris (FR)
(72) Inventeur: VARIN, Franck, Bernard, Léon, F-77580 Voulangis (FR)
(74) Mandataire: Gevers France
(86) Numéro de dépôt international: PCT/FR2012/050040
(87) Numéro de publication internationale: WO 2012/095594

(56) Documents cités:
- EP-A1- 1 302 562
- EP-A1- 2 018 088
- JP-A- 2001 041 002

## Description

L'invention concerne le domaine de la maintenance d'ensembles mécaniques et, plus particulièrement le remplacement d'une pièce mécanique magnétique endommagée d'un turbomoteur pour aéronef.

Un turbomoteur d'aéronef comporte des aubes comportant un corps en matériau composite dont le bord d'attaque est recouvert d'un blindage métallique. Le corps de l'aube en matériau composite comporte classiquement une résine thermodurcissable renforcée par des fibres de carbone. De manière classique, le blindage métallique est solidarisé au bord d'attaque de l'aube par un film de colle recouvrant sa partie intérieure. Au fil du temps, le blindage se détériore et il est nécessaire de le remplacer au cours d'une opération de maintenance pendant laquelle l'aube subie diverses étapes d'usinage (clivage, pelage, traction, etc.) afin de retirer le blindage usagé. Après les contrôles et préparations de surface appropriés, un nouveau blindage métallique est collé sur le bord de l'aube par l'intermédiaire d'un film de colle.

Un tel procédé de maintenance présente plusieurs inconvénients. Tout d'abord, les étapes d'usinage successives sont susceptibles d'endommager l'aube et entraîner des arrachements de fibres du corps de l'aube qui limitent la durée de vie de l'aube ou conduisent à son rebut.

D'autre part, l'utilisation d'un chauffage conventionnel par convection, conduction ou rayonnement dans le but d'affaiblir les caractéristiques d'adhérence du film de colle et faciliter sa dépose se révèle impossible sans risquer d'endommager la résine du corps de l'aube et de dégrader la qualité géométrique de l'aube en matériau composite.

Un procédé de maintenance tel que décrit précédemment n'est donc pas adapté pour répondre aux besoins actuels.

Bien que l'invention soit née d'un problème de maintenance d'une aube de turbomoteur, l'invention concerne de manière générale le remplacement de toute pièce mécanique magnétique solidaire d'une autre pièce mécanique par un film de colle.

A cet effet, l'invention concerne un procédé de désolidarisation d'une première pièce mécanique à une deuxième pièce mécanique magnétique, la première pièce mécanique étant collée à la deuxième pièce mécanique magnétique par un film de colle selon une zone de liaison, procédé dans lequel on génère un champ magnétique au moins dans la zone de liaison de manière à générer par induction des courants de Foucault dans la deuxième pièce mécanique magnétique pour ramollir le film de colle et permettre la désolidarisation des pièces mécaniques.

La génération d'un champ magnétique permet de désolidariser la deuxième pièce mécanique magnétique sans recourir à un usinage pouvant altérer une des deux pièces mécaniques. Le champ magnétique induit des courants de Foucault dans la deuxième pièce mécanique qui viennent l'échauffer du fait de son caractère magnétique. L'élévation de température de la surface de liaison de la deuxième pièce mécanique magnétique entraîne, d'une part, un chauffage du film de colle qui se ramollit et perd de ses caractéristiques d'adhésion et, d'autre part, une dilatation thermique de la deuxième pièce mécanique magnétique. La dilatation thermique entre les deux pièces mécaniques entraîne un cisaillement mécanique entre le film de colle et la deuxième pièce mécanique magnétique. La désolidarisation de la deuxième pièce mécanique magnétique ne nécessite alors aucun usinage.

De préférence, seule la zone de liaison est placée dans le champ magnétique ce qui permet d'échauffer de manière locale la deuxième pièce mécanique magnétique sans affecter sa durée de vie.

L'application d'un champ magnétique permet de solidariser les deux pièces mécaniques de manière rapide en ne créant qu'un échauffement localisé.

De préférence, la première pièce mécanique est une pièce en matériau composite, de préférence, non magnétique. Une pièce mécanique en matériau composite n'est pas chauffée par induction ce qui permet d'éviter son endommagement.

De préférence, la première pièce mécanique est une aube de turbomoteur. Une aube de turbomoteur doit posséder une surface exempte de toute rayure. La mise en oeuvre de tels procédés pour une aube de turbomoteur permet de garantir l'intégrité de l'aube.

De préférence encore, l'aube de turbomoteur est constituée d'un matériau composite, de préférence, à matrice organique. Un tel matériau composite n'est en général pas magnétique et ne permet pas de conduire les courants de Foucault, seul le film de colle étant échauffé par la deuxième pièce mécanique magnétique lors de la mise en oeuvre du procédé de solidarisation ou de désolidarisation, l'aube de turbomoteur n'étant donc pas chauffée en tant que telle. En outre, un chauffage par induction est très bref ce qui limite le risque d'endommagement thermique d'une aube en matériau composite formée à partir de résine thermodurcissable et renforcée avec des fibres de carbone. De plus, le matériau composite n'est pas affecté par les étapes d'usinage mises en oeuvre au cours des procédés de désolidarisation. La surface de contact de la pièce composite ne subit plus d'arrachement de fibres.

Selon un aspect préféré de l'invention, la deuxième pièce mécanique magnétique est un blindage pour une aube de turbomoteur. Un tel blindage, de préférence métallique, est par nature magnétique et permet la circulation de courants de Foucault. De manière avantageuse, le retrait ou l'application d'un blindage endommagé d'une aube de turbomoteur est simple et rapide, le film de colle étant échauffé de manière locale par le blindage qui doit être retiré ou appliqué. Lors de la génération du champ magnétique, seul le blindage métallique, qui est sensible au champ magnétique s'échauffe, ce qui permet de préserver intactes les propriétés de l'aube en matériau composite, en particulier les propriétés de la résine du matériau composite.

De préférence, l'aube de turbomoteur comportant un bord d'attaque, le blindage est agencé pour être collé au bord d'attaque de l'aube.

Selon un autre aspect de l'invention, la première pièce métallique est un carter de turbomoteur et la deuxième pièce métallique est un insert magnétique agencé pour permettre le montage d'équipement sur le carter du turbomoteur.

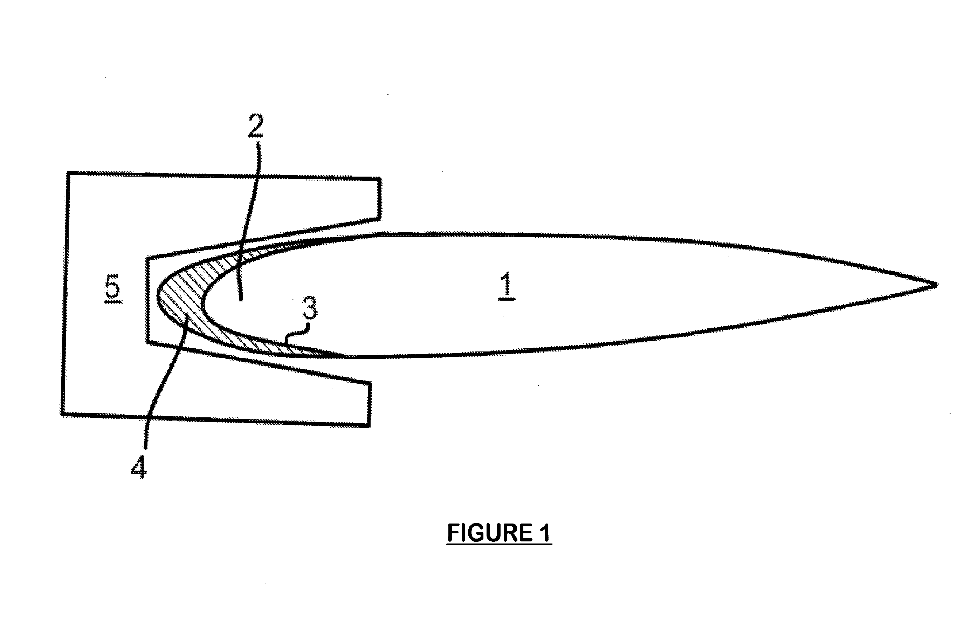

L'invention sera mieux comprise à la lecture de la description qui va suivre, donnée uniquement à titre d'exemple, en se référant au dessin annexé sur lequel la figure unique représente schématiquement, selon une vue en coupe, une aube de turbomoteur dont le bord d'attaque est recouvert par un blindage, le bord d'attaque de l'aube étant placé dans un champ magnétique généré par un inducteur.

L'invention est présentée, en référence à la figure unique, pour une aube de turbomoteur 1 comportant un bord d'attaque 2 qui est recouvert par un blindage 4, le blindage 4 étant collé au bord d'attaque 2 par l'intermédiaire d'un film de colle 3 selon une zone de liaison. Autrement dit, ledit film de colle 3 est situé entre le bord d'attaque 2 de l'aube 1 et le blindage 4 comme représenté sur la figure unique.

Le blindage 4 est ici constitué de métal mais il va de soi que d'autres matériaux magnétiques pourraient convenir.

Pour désolidariser le blindage 4 du bord d'attaque 2 de l'aube 1, le bord d'attaque 2 est placé dans un champ magnétique généré par un inducteur 5 représenté schématiquement sur la figure unique.

De manière préférée, seule la zone de liaison du bord d'attaque 2 qui est recouverte du film de colle 3 est placée dans le champ magnétique.

Sous l'effet du champ magnétique, le blindage métallique 4 s'échauffe du fait des courants de Foucault générés par l'induction et transmet des calories au film de colle 3. Le film de colle s'échauffe, se ramollit et ses caractéristiques mécaniques diminuent. En outre, le blindage 4 se dilate thermiquement par rapport à l'aube 1 ce qui entraîne l'apparition de contraintes de cisaillement qui viennent désolidariser le blindage 4 du bord d'attaque 2 de l'aube 1. On peut alors retirer le blindage 4 du bord d'attaque 2. De manière avantageuse, aucune étape d'usinage n'est mise en oeuvre, le risque d'endommagement de l'aube 1 est ainsi limité. Cela est particulièrement avantageux pour une aube 1 en matériau composite qui est vulnérable aux opérations d'usinage.

Le chauffage par induction ne présente aucun risque pour une aube en composite 1 étant donné qu'une aube en composite, en particulier une aube composite à matrice organique, n'est pas magnétique et ne permet pas la circulation d'électrons générateurs de courants de Foucault. Il en résulte que seul le film de colle 3 s'échauffe au contact du blindage magnétique 4, le risque d'endommagement thermique de l'aube composite 1 étant très réduit.

Un chauffage par induction permet en outre de solidariser un nouveau blindage au bord d'attaque 2 de l'aube 1, en particulier, après retrait du blindage endommagé.

Pour solidariser un blindage 4 au bord d'attaque 2 d'une aube 1 en matériau composite, on applique un film de colle 3 entre le bord d'attaque 2 et le blindage 4 que l'on vient chauffer par induction au moyen d'un inducteur 5. Le film de colle 3 polymérise sous l'effet de la chaleur générée par la circulation de courants de Foucault dans le blindage 4. On maintient le blindage 4 en position sur le bord d'attaque 2 et on arrête le chauffage du film de colle 3. Ce dernier se solidifie et vient solidariser le blindage 4 avec le bord d'attaque 2. L'aube 1 obtenue peut alors être montée sur un turbomoteur.

A titre d'exemple, on solidarise un blindage 4 en titane sur un bord d'attaque 2 d'une aube 1 en matériau composite, de préférence organique, comportant des fibres de carbone. Selon une forme de réalisation préférée, on utilise une colle du type époxy qui est déposée sur une épaisseur de l'ordre du millimètre. Il va de soi qu'en fonction de la colle utilisée et des matériaux constitutifs des pièces à solidariser/désolidariser, la valeur du champ magnétique généré par l'inducteur doit être adaptée.

L'invention a été présentée pour la solidarisation/désolidarisation d'un blindage d'une aube de turbomoteur mais elle s'applique à toute solidarisation/désolidarisation d'une première pièce mécanique à une deuxième pièce mécanique magnétique. L'invention vise entre autres le remplacement d'un insert métallique magnétique sur un carter de turbomoteur, de préférence, en matériau composite à matrice organique. Un tel insert métallique permet en particulier le montage d'équipements sur le carter du turbomoteur.

## Revendications

1. Procédé de désolidarisation d'une première pièce mécanique (1) à une deuxième pièce mécanique magnétique (4), la première pièce mécanique (1) étant collée à la deuxième pièce mécanique magnétique (4) par un film de colle (3) selon une zone de liaison, procédé dans lequel on génère un champ magnétique au moins dans la zone de liaison de manière à générer par induction des courants de Foucault dans la deuxième pièce mécanique magnétique (4) pour ramollir le film de colle (3) et permettre la désolidarisation des pièces mécaniques (4, 1).

2. Procédé selon la revendication 1, dans lequel, la première pièce mécanique est une pièce en matériau composite, de préférence, non magnétique.

3. Procédé selon l'une des revendications 1 à 2, dans lequel, la première pièce mécanique est une aube de turbomoteur (1).

4. Procédé selon la revendication 3, dans lequel l'aube de turbomoteur (1) est constituée d'un matériau composite à matrice organique.

5. Procédé selon l'une des revendications 3 à 4, dans lequel la deuxième pièce mécanique (4) magnétique est un blindage (4) pour une aube de turbomoteur (1).

6. Procédé selon la revendication 5, dans lequel le blindage (4) est métallique.

7. Procédé selon l'une des revendications 3 à 6, dans lequel, l'aube de turbomoteur (1) comportant un bord d'attaque (2), le blindage (4) est agencé pour être collé au bord d'attaque (2) de l'aube (1).

8. Procédé selon l'une des revendications 1 à 2, dans lequel la première pièce mécanique est un carter de turbomoteur et la deuxième pièce mécanique magnétique est un insert magnétique.

## Patentansprüche

1. Verfahren zur Trennung eines ersten mechanischen Teils (1) von einem zweiten, magnetischen mechanischen Teil (4), wobei das erste mechanische Teil (1) durch einen Klebstofffilm (3) in einem Verbindungsbereich an das zweite, magnetische mechanische Teil (4) geklebt ist, wobei bei diesem Verfahren wenigstens in dem Verbindungsbereich ein Magnetfeld erzeugt wird, derart, dass durch Induktion Foucault-Ströme in dem zweiten, magnetischen mechanischen Teil (4) erzeugt werden, um den Klebstofffilm (3) zu erweichen und die Trennung der mechanischen Teile (4, 1) zu ermöglichen.

2. Verfahren nach Anspruch 1, wobei das erste mechanische Teil ein Teil aus vorzugsweise nichtmagnetischem Verbundmaterial ist.

3. Verfahren nach einem der Ansprüche 1 bis 2, wobei das erste mechanische Teil eine Turbomaschinenschaufel (1) ist.

4. Verfahren nach Anspruch 3, wobei die Turbomaschinenschaufel (1) aus einem Verbundmaterial mit organischer Matrix besteht.

5. Verfahren nach einem der Ansprüche 3 bis 4, wobei das zweite, magnetische mechanische Teil (4) eine Panzerung (4) für eine Turbomaschinenschaufel (1) ist.

6. Verfahren nach Anspruch 5, wobei die Panzerung (4) metallisch ist.

7. Verfahren nach einem der Ansprüche 3 bis 6, wobei, wenn die Turbomaschinenschaufel (1) eine Vorderkante (2) aufweist, die Panzerung (4) dafür ausgelegt ist, an die Vorderkante (2) der Schaufel (1) geklebt zu werden.

8. Verfahren nach einem der Ansprüche 1 bis 2, wobei das erste mechanische Teil ein Turbomaschinengehäuse ist und das zweite, magnetische mechanische Teil ein magnetischer Einsatz ist.

## Claims

1. Method for disconnecting a first mechanical part (1) from a magnetic second mechanical part (4), the first mechanical part (1) being adhered to the magnetic second mechanical part (4) by means of an adhesive film (3) along a connecting area, method wherein a magnetic field is generated, at least in the connecting area, so as to generate by induction eddy current in the magnetic second mechanical part (4) in order to soften the adhesive film (3) and enable the disconnecting of the mechanical parts (4, 1).

2. Method according to claim 1, wherein the first mechanical part is a part made of composite material that is preferably non-magnetic.

3. Method according to any one of claims 1 - 2, wherein the first mechanical part is a turboshaft engine blade (1).

4. Method according to claim 3, wherein the turboshaft engine blade (1) is made of a composite material having an organic matrix.

5. Method according to any one of claims 3 - 4, wherein the magnetic second mechanical part (4) is a shield (4) for a turboshaft engine blade (1).

6. Method according to claim 5, wherein the shield (4) is made of metal.

7. Method according to any one of claims 3 - 6, wherein, as the turboshaft engine blade (1) comprises a leading edge (2), the shield (4) is arranged to be adhered to the leading edge (2) of the blade (1).

8. Method according to any one of claims 1 - 2, wherein the first mechanical part is a turboshaft engine casing and the magnetic second mechanical part is a magnetic insert.
